(19) Europäisches Patentamt
European Patent Office
Office européen des brevets

(11) Publication number: 0 122 480 B1

(12) EUROPEAN PATENT SPECIFICATION

(45) Date of publication of patent specification: 15.03.89

(51) Int. Cl.$^4$: B 60 C 21/00, B 29 D 29/06, C 08 J 5/12, C 08 J 7/12

(21) Application number: 84102927.5

(22) Date of filing: 16.03.84

# (54) Ambient temperature repair of elastomeric articles having a hollow or deformity therein.

(30) Priority: 21.03.83 US 477454
21.03.83 US 477453
21.03.83 US 477452

(43) Date of publication of application:
24.10.84 Bulletin 84/43

(45) Publication of the grant of the patent:
15.03.89 Bulletin 89/11

(84) Designated Contracting States:
BE DE FR GB IT LU SE

(56) References cited:
EP-A-0 025 904
GB-A-1 121 489
US-A-3 088 512
US-A-3 190 338
WALRUS System Mercks Tires on Site (Costruction Equipment 145/1986)
The time has come /Tyres & Accessories November 1986
WALRUS-Leoflet Firestone

(73) Proprietor: THE FIRESTONE TIRE & RUBBER COMPANY
1200 Firestone Parkway
Akron, Ohio 44317 (US)

(72) Inventor: Koch, Russell W.
2135 Howard Street
Hartville Ohio 44632 (US)
Inventor: Hausch, Walter R.
327 Caladonia Avenue
Akron Ohio 44313 (US)
Inventor: Barbin, William W.
3635 Riveria Street N.W.
Massillon Ohio 44646 (US)

(74) Representative: von Raffay, Vincenz, Dipl.-Ing. et al
Patentanwälte Raffay, Fleck & Partner Postfach 32 32 17
D-2000 Hamburg 13 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 122 480 B1

**Description**

The present invention relates to a composition and method for repairing reinforced elastomer articles having a hollow or deformity, e.g. a cut or cavity therein. EP—A—25 904 discloses a method for repairing damaged tires at ambient temperatures with the following steps:

(i) cleaning the damaged surface

(ii) treating the surface with a treating agent selected from the group consisting of N-halosulfonamides, N-halohydantoins, N-haloamides, N-haloimides;

(iii) applying a (pre)polymer curing agent system comprising

(a) curable (pre)polymer

(b) a curing agent

optionally, a plastisizer and

(c) a polar solvent, for instance acetone.

British Patent No. 1,121,489 relates to a tire repair patch wherein a hole or aperture is filled with a rubber compound similar to that of the tread portion. Hence, a plug must be cured by heating. Although a patch is utilized having cords therein, it is applied directly to the interior of the tire via a conventional adhesive. This reference lacks any suggestion of an amine curable polymer or prepolymer as a filler, that is the plug, a treating agent such as trichlorisocyanuric acid, an amine curable polymer or prepolymer layer located between the patch and the tire, or an ambient temperature cure of the plug.

Furthermore, it has been known that reinforced rubber articles such as tires having a cut or opening therein have been repaired generally by filling the cut with uncured rubber. Such a repair required a source of heat to cure the rubber and the formed repair usually had a short life. If the opening extended through some of the cords or through the entire tire, a patch was generally used. That is, a uncured rubber compound was first added to the aperture or hole and then cured with heat. Next, the patch area for example the inside of the tire, was buffed. An uncured patch was then positioned and cured with heat. This repair route was not only long and tedious, but required the utilization of heat, usually a tire mold, and the like. Thus, except for a chemical cure patch, an on-the-spot or *in-situ* repair could not be made, nor could repair be made at an ambient temperature. Moreover, the chemical patch methods generally resulted in low or poor adhesion.

Considering the prior art. U.S. Patent Nos. 3,755,261 to VanGulick; 3,888,831 to Kogon; 3,834,934 to Broisman, 3,644,256 also to Broisman; and 3,718,587 to Bhakuni relate to amine curable curing agents, amine curable polymers, or R—F—L type adhesives. However, these patents lack any suggestion of applicants' treating agent or repair of an elastomer article.

U.S. Patent No. 3,779,794 to DeSantis relates to a moisture-curable polyurethane sealant primer system, whereas U.S. Patent No. 4,085,283 to Den Otter relates to flame retardants utilized in cyanuric acid derivatives. Hughson Chemical Division, Lord Corporation, Product No. TS—2682—71 relates to a surface primer for elstomeric substances utilizing a proprietary compound thought to be mono- or dichloroisocyanuric acid. An article entitled "Room Temperature Vulcanizing Adhesive Based on Ethylene-Propylene-Diene Terpolymer," Cantor, Uniroyal, Paper No. 18 presented to the Division of Rubber Chemistry of the American Chemical Society, Denver, Colorado, October 10, 1973, relates to various oxidants which effect ambient temperature cures of EPDM.

U.S. Patent No. 4,136,219 to Oldam relates to a polyurethane paint which is applied to vulcanized rubbers. British Patent No. 1,352,645 relates to a polyurethane paint which is applied to vulcanized rubbers.

British Patent No. 1,352,645 relates to N-halogen sulphonamide treating agents which halogenize surfaces of synthetic and/or natural rubbers.

U.S. Patent No. 4,125,522 to Becker relates to a polyurethane adhesive, whereas U.S. Patent No. 3,966,530 to Cutts relates to triazoline diones which are utilized in lieu of chlorinated or halogenated donors for treating elastomeric surfaces to improve adhesion.

U.S. Patent No. 4,143,454 to Utsunomiya relates to a method of attaching connecting parts of an offshore structure wherein a liquid rubber is applied over a treating solution which may contain a halogen molecule. As such, this reference lacks applicants' treating agent as well as repair of an elastomer article having a patch thereon.

U.S. Patent No. 4,158,378 to Pearson relates to a cured rubber tire having a specific polyurethane therein and to a chlorine water treatment. Hence, Pearson also fails to teach or suggest applicants' recited treating agent as well as patched article.

U.S. Patent No. 3,991,255 to Blaskjiewicz relates to the adhesion of a polyurethane to an EPDM surface utilizing various adhesives. However, Blaskjiewicz does not use his treating agent to form a treating layer and utilizes elevated temperatures.

U.S. Patent No. 4,300,970 to Honda does not disclose amine curable resins or an ambient temperature cure.

U.S. Patent No. 4,240,852 to Gomberg relates only to the use of a cyanoacrylate adhesive.

U.S. Patent No. 4,352,704 to Williams relates to applying tire tread to a tire. This patent lacks any suggestion of applicants' treating agent or the repair of a tire aperture.

U.S. Patent No. 4,327,138 to Hausch fails to disclose a cured rubber patch in repairing a rubber article.

One prior art method of repairing a tire relates to the utilization of a proprietary compound, thought to

be a mixture of rubber and accelerators which is applied to the aperture and then cured. In general, very poor adhesion results and heat is required.

Disclosure of Invention

It is therefore, an aspect of the present invention to provide a repaired, reinforced elastomer article having a hollow therein utilizing a cured rubber patch and an amine curable polymer or prepolymer.

It is yet another aspect of the present invention to provide a repaired, reinforced elastomer article, as above, in which the hollow extends into or through the reinforced material in which a layer of a treating agent resides in said hollow and in an area betweeen said patch and said article and the repair is made at ambient temperatures.

It is still a further aspect of the present invention to provide a repaired, reinforced elastomer article, as above, wherein said repaired elastomer article is a tire, a conveyor belt.

It is yet another aspect of the present inventon to provide a repaired, reinforced elastomer article, as above, wherein said patch has one or more cords therein.

In another aspect of the present invention a reinforced, repaired elastomer article has an opening or deformity therein such as a cut, or a hollow such as a cavity, or aperture and utilizes a cured rubber patch and an amine curable polymer or prepolymer.

It is yet another aspect of the present invention to provide a reinforced, repaired elastomer article, as above, in which said amine curable polymer or prepolymer fills said opening or said hollow and has a rubber filler therein.

It is still a further aspect of the present invention to provide a reinforced, repaired elastomer article, as above, in which said amine curable polymer or prepolymer resides in said patch area and does not contain any rubber filler therein.

In another aspect of the invention, a repaired reinforced elastomer article having a hollow is filled with gum rubber and utilizes a cured rubber patch and an amine curable polymer or prepolymer.

It is yet another aspect of the present invention to provide a repaired rubber elastomer, as above, wherein said amine curable polymer or prepolymer is a urethane polymer or prepolymer, and wherein said treating agent is trichloroisocyanuric acid (trichloro-s-triazinetrione).

These and others aspect of the present invention will become apparent from the following description of the invention.

In general, one aspect of the invention is repaired, reinforced elastomer article, comprising the features (a)—(f) of claim 1, which reads:

A repaired, reinforced elastomer article, comprising:

(a) the elastomer article, said elastomer having unsaturated groups therein, said article being cured and having a hollow or cut therein;

(b) a treating agent, said treating agent coating said hollow or cut, said treating agent selected from the group consisting of N-halohydantoins, N-haloamides, N-halimides, and combinations thereof;

(c) an amine curable polymer or prepolymer, said amine curable polymer or prepolymer substantially filling said hollow or cut;

(d) said amine curable polymer or prepolymer having been bonded to said hollow or cut at ambient temperature, characterized by

(e) a cured elastomer patch, said patch being cured and located juxtaposition to said hollow or cut on the interior of said article; and

(f) said amine curable polymer or prepolymer also located between said patch and said article in said juxtaposition area and having rubber particles therein, substantially filling said hollow or cut wherein the amount of said rubber particles in said hollow or cut is from 10 percent to 75 percent by weight based on the weight of said amine curable polymer or prepolymer and said rubber filler particles and wherein said rubber filler particles have a particle size from 10 mm to 0.01 mm.

Brief Description of Drawings

Fig. 1 relates to a cross-sectional view showing the repair of a reinforced elastomeric article having an aperture extending therethrough, according to the present invention; and

Fig. 2 relates to a cross-sectional view showing the repair of a reinforced elastomeric article having a cavity extending into the cord area, according to the present invention.

Fig. 3 relates to a cross-sectional view showing the repair of a reinforced, elastomeric article having an aperture therethrough, according to the present invention utilizing a rubber filler therein;

Fig. 4 relates to a cross-sectional view showing the repair of an elastomer article having a cut therein, according to the present invention utilizing a rubber filler therein;

Fig. 5 relates to a cross-sectional view showing the repair of a reinforced elastomer article having a cavity therein, according to the present invention utilizing a rubber filler therein;

Fig. 6 relates to a cross-sectional view showing the repair of a reinforced elastomeric article having a hollow extending completely therethrough, according to the present invention; and

Fig. 7 is a cross-sectional view showing the repair of a similar reinforced elastomeric article wherein the hollow extends only partially therethrough.

Preferred Embodiments

According to the concepts of the present invention, a reinforced elastomer article having a hollow therein is repaired in association with a cured rubber patch. The hollow, that is the recess or void exists in the article and extends at least into the reinforced area such that some of the cords, that is at least approximately 25 percent, are damaged, broken, or severed. When the hollow extends only into the cord area, a cavity is formed in the article. When the article extends entirely through the article, an aperture is formed. In either case, an amine curable polymer or prepolymer is applied to the hollow and to a space between the rubber elastomer and cured rubber patch. Cure occurs at ambient temperature.

Substrate Elastomers

According to the the embodiment of Fig. 1, article 10 has hollow 12 in the form of an aperture, and extends clearly therethrough. The article to be repaired, or substrate, is a cured rubber or elastomer, having unsaturated groups therein. The substrate typically has cords 14 therein. The substrate can be any conventional elastomer or rubber known to those skilled in the art. For example, it can be made from conjugated dienes having from 4 to 12 carbon atoms such as butadiene and isoprene. It can also be made from natural rubber, that is from a substance which is obtained from various trees and plants which grow in the tropics or desert portions of the world. Such natural rubber generally has in excess of 90 and usually in excess of 95 percent of cis-1,4-polyisoprene content. The substrate may also be various elastomeric copolymers such as those made from monomers of conjugated dienes having from 4 to 12 carbon atoms as set forth above, and vinyl substituted aromatic compounds having from 8 to 15 carbon atoms. Examples of such vinyl substituted aromatic compounds include styrene and alpha-methylstyrene. An example of a specific copolymer is styrene-butadiene rubber.

Naturally, other types of rubber compounds can be utilized such as the so-called butyl rubbers, neoprene, that is polychloroprene as well as blends of said above rubbers.

Elastomer Preparation

The preparation of such above noted various elastomers is well known in the art. The article to be repaired is often in the form of a tire, especially an off-the-road tire, a conveyor belt, or any rubber article having a hollow therein. Regardless of the type or nature of the article in which the elastomer exists as a cured form, it is desirable to clean the surfaces to which the amine curable polymer is to be applied. Cleaning can take place as through a physical treatment of the area to be repaired, for example, as through buffing or through skiving, that is cutting and removing a portion of the surface. Another method involves the use of any conventional organic solvent to remove dirt and residue. Typical solvents include acetone, or ethyl acetate. As apparent from the drawing, the area which is typically cleaned involves aperture 12, the area adjacent to patch 20 and the patch as well. Thus, the aperture may be difficult to clean by physical means, can be cleaned by utilizing a solvent whereas the bottom portion of the article can be buffed. To ensure removal of all loose rubber, the buffed portion can then be cleaned with a a solvent.

Treating agents

To the cleaned surfaces are applied a coating of various treating agents 30 which have been found to improve adhesion betwen the substrate and the amine curable polymer or prepolymer 40. Suitable treating agents include the various N-halohydantoins, the various N-haloamides, the various N-haloimides, and combinations thereof. Examples of various desirable N-halohydantoins include 1,3-dichloro-5,5-dimethyl hydantoin; 1,3- dibromo-5,5-dimethyl hydantoin; 1,3-dichloro-5-methyl-5-isobutyl hydantoin; and 1,3-dichloro-5-methyl-5-hexyl hydantoin. Examples of N-haloamides include N-bromoacetamide and tetrachloroglycoluril. Examples of N-haloimides include N-bromosuccinimide and the various chloro substituted s-triazinetriones, commonly known as mono-, di-, and trichloroisocyanuric acids. A preferred treating composition for use in the practice of the present invention are the various mono-, di-, or trichloroisocyanuric acids, or combinations thereof. Trichloroisocyanuric acid is especially preferred.

Application of Treating Agents

The treating agents usually exist in solid form. They are readily soluble in solvents such as acetone and the like and thus can be applied in liquid form. Application of the treating agent generally occurs at ambient temperatures. Application can occur through any conventional manner as through brushing and spraying. The amount applied is such that the rubber substrate is coated. Preferably, two or more coats of the treating agent or adhesive compound is used to ensure that all the cured rubber substrate surface has been coated.

Typical Amounts of Treating Agents

A typical amount of the treating agent in the suitable solvent, for example ethyl acetate or acetone is generally from about 0.1 to about 10 percent by weight based upon the total weight of said treating agent and solvent, and preferably from about 0.5 percent to about 5 percent. Of course, higher or lower concentrations can be utilized. This solvent system has been found to dry within a matter of minutes so that the amine curable-polymer or prepolymer can be bonded thereto. It is thought that the adhesive treating system adds halogen groups, for example, chlorine to the cured rubber which activates the cured rubber

surface allowing the amine curable polymer or polymer system to adhere strongly to the cured rubber surface.

Amine Curable Polymers or Prepolymers

Of the various amine curable polymers or prepolymers, the urethanes are preferred. Other prepolymers or polymers which can be cured with the amine curing agent include the compounds set forth in U.S. Patent No. 3,755,261. Briefly, such compounds are the various epoxy resins such as those disclosed in the "Encyclopedia of Polymer Science and Technology" Interscience Publishers, New York (1967), Volume 6, pages 212—221; halogen-containing hydrocarbon polymers such as chloroprene polymers, chlorinated butyl rubber, and chlorinated polyethylene and polypropylene; chlorosulfonated polymers such as those described in U.S. Patent No. 2,723,257; polymers containing acid halide groups such as

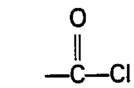

and haloformate groups such as

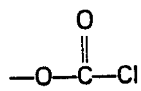

polymers containing anhydride groups which on reaction with diamines yield amide-acid linkages, and organo-polysiloxanes as described in U.S. Patent No. 2,938,010.

Typical Urethane Polymers or Prepolymers

The urethane prepolymers or polymers, that is those which contain isocyanate groups, are generally formed by first reacting a polyether polyol or a polyester polyol with a molar excess of a diisocyanate to form a prepolymer having terminal isocyanate groups. The polymer is then cured to increase its molecular weight from less than about 3,000 upwards to over 10,000. Examples of such polymers are set forth in U.S. Patent Nos. 2,620,516; 2,777,831; 2,843,568; 2,866,774; 2,900,368; 2,929,800; 2,948, 691; 2,948,707; and 3,114,735. Typical specific examples of such polyurethanes include Adiprene L—367, polytetramethylene ether glycol containing approximately 6.4 percent isocyanate end groups by weight, manufactured by DuPont; Adiprene L—42, polytetramethylene ether glycol containing approximately 2.8 percent isocyanate end groups by weight, manufactured by DuPont; and Cyanaprene A—7, a polyester-based coating polymer with approximately 2.4 per cent isocyanate end groups, manufactured by American Cyanamid. Blends of these polyurethanes can also be utilized. Moreover, it has been found, particularly with repair or application of the amine curable polymer to the patch area, that is the area between patch 20 and cured substrate 11, better adhesion is often obtained by utilizing two different types of urethane. For example, a urethane containing a high amount by weight of isocyanate end groups such as Adiprene L—367 can be blended with a urethane containing a low amount of isocyanate end groups such as Adiprene L—42. The amount of one urethane to the other can range from about 1 to about 99 percent and desirably from about 30 to about 70 percent by weight.

Amine Curing Agents

To the amine curable prepolymer or polymer compound is added a conventional amine curing agent, known to those skilled in the art. Generally, any conventional or known amine curing agent can be used and, thus, only a few specific examples will be given. Thus, the curing agent can be MOCA, that is 4,4'-methylene bis(2-chloroaniline) or, desirably a complex of 4,4'-methylene dianiline and a salt, or a complex of racemic 2,3-di(4-aminophenyl) butane and a salt, as set forth in U.S. Patent No. 3,755,261 to VanGulick. The latter two complexes are preferred. The methods for preparing the complexes are set forth in U.S. Patent No. 3,755,261. A preferred salt utilized with the 4,4'-methylene dianiline compound is sodium chloride or lithium chloride. Due generally to availability and costs, the complexes or salts derived from 4,4'-methylene dianiline are highly preferred. Another class of amine curing agents which can be utilized are the various Versamides, that is the condensation products of polyamines and dibasic acids obtained when certain unsaturated fatty acids are polymerized, and are manufactured by Henkel Chemical Company.

Equivalent Weight of Amine Curing Agents

Equivalent weight of the curing agent utilized with regard to the curable prepolymer or polymer, including the amine curing agent, generally ranges from about 85 percent to 115 percent with from about 95 to 105 percent being preferred.

Often to facilitate processing, the curing agent, and especially an amine curing agent such as the complex of 4,4'-methylene dianiline and a salt is utilized with a plasticizer such as dioctylphthalate on a 50 percent weight basis, or Flexol 4—GO, tetraethylene glycol bis(2-ethyl hexanoate) manufactured by Union Carbide Corporation on a 50 percent weight basis. The amount of plasticizer can range from about 20 percent to above 60 weight percent.

Blending of Curing Agents with Polar Solvent

The curing agent is blended with the prepolymer or polymers in various mixers such as dough mixers, high speed impellers and paddle-type mixers. Small batches can be mixed by stirring with a spatula. Usually, the prepolymer or polymer is a liquid. If not, when mixed with the polar solvent, a liquid mixture results. However, even if a solid curing agent is used, when added to the prepolymer or the polymer, and to a solvent system, a liquid system results even though the curing agent (e.g., amine) can be in the form of a dispersion. Thus, even though the system may contain solids therein, the solids exist in the form of a dispersion so that a liquid system is produced. The polar solvent is selected from a compound having dipole moments in excess of 0,4 debye which there are no more than a total of 8 $CH_3$—, $CH_2$— or tertiary carbon radicals per polar group contained in solid compound, benzene, and biphenyl.

Amount of Polar Solvents

The curing agent and the amine curable polymers or prepolymers form the curable polymer system which is mixed with a polar solvent so that a liquid system is obtained which cures at ambient or room temperature, that is, the prevailing temperature as from about 10°C to about 50°C. Often the ambient temperature will range from about 15°C to about 35°C or 40°C. The polar solvents which can be utilized, especially with the amine curing agent and the amine polymers or prepolymers are, for example, set forth in U.S. Patent No. 3,888,831 to Kogon. Generally, the amount of solvent utilized per 100 parts by weight of the curable prepolymer or polymer ranges from about 2 to about 40, desirably from about 2 to about 20, and preferably from about 5 to about 15 parts by weight. Specific examples of preferred solvents include dimethylformamide, tetrahydrofuran, cyclohexanone, ethyl acetate, nitromethane, nitroethane, nitropropane, methyl ethyl ketone, and acetone. Acetone and methyl ethyl ketone are highly preferred. The amount of curing agent, based upon the said polymer or prepolymer, ranges from about 0.85 to about 1.15 equivalents.

Patch Construction

Considering patch 20, it can generally be of any desired size so long as it is greater in surface area than the aperture adjacent thereto. Typically, the surface area of the patch is at least twice as great as the aperture. Generally, an appropriate patch size will be known to one skilled in the art of patch construction and/or patch application. The patch is made of rubber and is generally fully cured. Although cured natural rubber or a composition containing at least 80 percent by weight of natural rubber is often preferred, any conventional type of cured rubber compound can be utilized. Thus, the patch can be made substantially from homopolymers of a conjugated diene having from 4 to 12 carbon atoms, copolymers made from conjugated dienes having from 4 to 12 carbon atoms with vinyl substituted aromatics having from 8 to 15 carbon atoms, for example styrene- butadiene rubber. In essence, the patch can be made out of the same type of rubber as the substrate. Often, the patch will have a cushioned layer thereon to alleviate stresses formed between the tire carcass and tire patch.

Since in the preferred embodiment of the present invention the substrate has cords therein, desirably the patch also has cords therein. Although the number of cords can range from a small number to a very large number, the strength of the cords in the patch is generally at least equal to the strength of the preinjured damaged cords contained in the substrate. More specifically, whenever approximately 25 percent to about 50 percent of the cords are damaged, severed, broken, etc., the strength of the cords in the patch is approximately equal to the strength of said cords being damaged etc. However, should approximately 50 percent to 100 percent of all the cords be damaged, severed, or otherwise injured, the strength of the cords in the patch is equal to the strength of the total cords in the article before any injury thereto. Should the number of damaged cords in the article be less than approximately 25 percent, then, the strength of the remaining cords is usually adequate such that a reinforced patch need not be utilized. The cords in the patch can be made of polyester, nylon, steel and rayon, with nylong being preferred. It has been found that according to the present invention, large apertures extending through a cured rubber substrate can be repaired up to approximately 20.32 cm (eight inches) in diameter.

Generally, any rubber article having an aperture therethrough can usually be repaired by the present invention. Specific examples include conveyor belts, tires, especially off-the-road tires such as those utilized for front-end loaders and mining equipment machines.

A repaired article having a hollow in the form of an aperture is shown in Fig. 2. An amine cured polymer or prepolymer, as for example a urethane cured polymer 40, fills the aperture. It also forms a good adhesive bond with treating agent 30 which in turn coats the aperture 12 of substrate 10, patch 20, and the adjacent article area. The amine cured urethane extends through the aperture and into the patch area, that is the area juxtaposition to the patch or located between the patch and the substrate. In this area, a good bond is also formed such that the patch reinforces the substrate. When the rubber article is a tire, usually the patch area is buffed sufficiently to remove surface contamination. The inner liner should at least be buffed and in some cases removed to the tie-gum layer in order to obtain a fresh surface. Occasionally, it is desirable to even remove one or two of the cord plies in order to ensure a fresh surface for bonding. Reinforcing patch 20 can contain a plurality of cords therein, generally approximately equal in strength to the total number of cords in the tire to be repaired. The patch is coated with the treating agent and then coated with the amine curable polymer or prepolymer. The patch is then taped into place over the aperture

area. The patch is also held in place by inflating a curing tube located inside the tire. With the aperture of the tire located in the uppermost vertical position, the amine curable polymer or prepolymer is poured into the aperture until it is filled. Of course, the aperture has previously been coated with the treating agent. The top of the aperture is then taped and the amine curable polymer in the patch area and in the aperture is allowed to cure at ambient temperature. Taping of the aperture area retains the polar solvent such as acetone which promotes curing of the polymer. In a variation of this procedure, the amine curable polymer is applied to the patch area and then the patch applied thereto. The patch is taped into place and the polymer is allowed to cure. Next, the amine curable polymer is separately added to the aperture so that it is filled and then taped thereover. The aperture portion of the repair is then separately cured at ambient temperatures. The end result by either method is a repaired article having much better strength and durability than that repaired according to heretofore conventional methods that are performed on site.

In the embodiment of Fig. 2, the hollow is in the form of a cavity wherein some cords of the reinforced article have been damaged or severed. Usually, at least 25 percent of the cords have been broken, damaged, etc., and the article is repaired utilizing a patch. Either the cavity can be filled or the patch applied first. In repair of cavity 112, treating agent 130 is applied to all surfaces thereof. Then, the cavity it filled with amine curable polymer 140, generally to the level of the substrate. Naturally, in this operation, the cavity is located in the uppermost vertical position of the article. As before, the tape is then applied over the filled cavity to promote curing of the polymer. Cure occurs at ambient temperature.

The patch area is prepared as before by cleaning and even buffing down to the tie-gum layer and even to the cord ply layer. Treating agent 130 is applied to the patch area of substrate 110 as well as to one side of patch 120. Amine curable polymer or prepolymer 140 is then applied to the treated side of the patch, with the patch in turn being applied to the treated portion of substrate 110. The ends of the patch can be taped to the substrate or held in place with a curing tube located inside the tire. The number of cords of the patch is as previously set forth. That is, if less than 25 percent of the cords are damaged, the use of the patch having cords therein is optional. When approximately 25 to about 50 percent of the cords are damaged, severed, etc., the strength of the cords in the patch is at least equal to the strength of such cords before being damaged. When approximately 50 percent or more of the cords are damaged, injured, broken, etc., the strength of the cords in the patch is equal to the strength of the total number of cords in the substrate before any injury thereto. The repair is then cured at ambient temperature.

In forming the amine curable polymer system, generally the amine curable polymer or prepolymer is mixed with the polar solvent and then the curing agent is added last. During cure, an effective and strong bond is formed between the prepolymer or polymer system and the treated elastomer substrate. Since the present invention relates to an ambient temperature, repair of large and cumbersome articles such as off-the-road tires, conveyor belts, can be made *in situ*. In other words, the repair can be made at the job site. The only accessory which may be required is a tire bladder, although a sand bag can be used. In such a situation, the repair can be made at the local tire repair shop. Since the cure is ambient, no steam chambers, or other vulcanizable tire repair equipment are required. This, of course, also results in an energy savings.

It is to be understood that various conventional additives in typical amounts can be added to the amine curing agent and prepolymer system such as colorants, softeners, fillers, antioxidants and plasticizers.

The invention will be better understood by reference to the following representative examples.

Example 1

A damaged off-the-road tire, having the injury through the innerliner, was repaired as follows. The damaged area was skived out, making sure to remove all of the damaged area, body plies, and lug areas. The repair area was then buffed to an RMA #3 or #4 buff rating. The innerliner must be at least removed to the tie-gum. In some cases, removal of one or two of the body plies was necessary in order to get a good fresh surface for bonding of the resin-forced patch. Once both areas have been buffed, they were thoroughly washed with a solvent, normally acetone on a piece of Rymplecloth. The acetone was allowed to dry thoroughly. Application of several coats of a 3 percent trichloro-s-triazinetrione in ethyl acetate follows the washing procedure. This likewise was allowed to dry thoroughly. Installation of the reinforcing patch was preferably done first. This was accomplished by mixing a polyurethane repair kit comprised of the following two components.

| COMPONENT A | | COMPONENT B | |
|---|---|---|---|
| Adiprene® L-42 | 150 grams | Caytur® 21 | 72 grams |
| Adiprene® L-367 | 150 grams | | |
| Flexol® 4GO | 30 grams | | |
| Acetone | 30 grams | | |

The thoroughly mixed polyurethane was then coated onto a reinforcing patch that was fully cured and

contained no uncured gum layer. The patch was buffed, washed and primed with the 3 precent trichloro-s-triazinetrione prior to the application of the polyurethane. After the patch was coated, the buffed portion of the innerliner was also coated. The polyurethane was allowed to thicken to a non-flowing material before installation of the patch to the innerliner was carrried out. The patch was taped in place and then held permenently in place by inflating a curing tube inside the tire. After the patch was secured, the tire was rotated 180° so that the aperture was at the top of the tire. Additional polyurethane repair material was poured into the aperture until completely full. The surface of the repair was covered with tape in order to keep the fluid material in place and allow the acetone to remain in the formulation long enough to fully cure the system. After standing 24 hours at ambient temperature, the tape was removed from the aperture and the curing tube and tape was removed from the innerliner position of the tire. The tire was ready to be placed back into service.

The above procedure was performed on a 37.25 × 35 scrapper tire. The size of the injury was a 10.15 cm (4 inch) inside diameter on the innerliner and 26.67 cm (10½ inch) outside diameter on the exterior (tread) surface. The injury was located in the crown area. A ROCO #7 patch was used (Rocson, Inc., Copley, Ohio). The patch was fully cured. After the tire was prepared it was placed back into service. The repaired tire lasted 342 hours before a small air leak occurred.

Rubber Fillers

According to other concepts of the present invention, an elastomer article having a deformity therein is substantially filled with an amine curable polymer or prepolymer. If the deformity is a cut, the amine curable polymer or prepolymer has a rubber filler therein. If the deformity is a hollow such as a cavity or an aperture, a cured elastomer patch is utilized in association with the repair and is located jutaxposition to said aperture. See Figs. 3, 4 and 5. The amine curable polymer or prepolymer in the hollow area will have a rubber filler therein. However, such polymer or prepolymer when utilized in the patch area will have no such filler. In either situation, cure of the amine curable polymer occurs at ambient temperature.

Generally, the article to be repaired has cords or reinforcement therein. When the article has a hollow therein, that is a recess or void, such hollow extends at least 25 percent into the reinforcement area such that some of the cords are broken, severed, damaged, or the like. When the hollow so extends only into the cord area, a cavity is formed in the article. When the hollow extends entirely through the article, an aperture is formed.

Considering an elastomer article having an aperture therethrough, as shown in Fig. 3, the article is generally indicated by the numeral 10. The article or substrate can be an elastomer of the type set forth above. Aperture 12 extends entirely through the article. The article to be repaired, or substrate is a cured rubber or elastomer having unsaturated groups therein. The article typically has cords 14 therein. In the embodiment of Fig. 4, a cured rubber article having unsaturated groups therein is generally indicated by the number 100. The cut area 112 has a treading agent 130 thereon. The cut is substantially filled with said amine curable polymer or prepolymer. In the embodiment of Fig. 5, cavity 212 extends into the reinforcement portion of the article, generally indicated by the number 200. Article 200 also has unsaturated groups therein. Regardless of the nature of the opening, the substrate can be any conventional elastomer or rubber known to those skilled in the art and as set forth herein above.

The article such as a tire is cleaned in a manner as set forth above, that is through physical treatment, use of convention organic solvents.

To the cleaned surfaces are applied a coating of various treating agents 30, 130 or 230 which have been found to improve adhesion between the substrate and the rubber filled amine curable polymer or prepolymer 40, 140, 240, respectively.

Suitable treating agents include the various N-halohydantoins, the various N-haloamides, the various N-haloimides, and combinations thereof. Examples of such treating agents are also set forth above and thus will not be repeated at this point. Application thereof is in any conventional manner and at ambient temperature, as set forth above.

The amount of the treating agent is generally from about 0.1 to about 10 percent by weight based upon the total weight of said treating agent and solvent, with the preferred amount being as set forth above.

With regard to the various amine curable polymers or prepolymers, they are the same as set forth above. Similarly, the amine curing agents have also previously been set forth as has the equivalent ratio as the use of a plasticizer. The blending of the amine curing agent as well as the ambient curing temperature range has also been described. Along with the amount of the solvent.

An important aspect of the present invention relates to the use of a rubber filler 50 in the amine curable polymer or prepolymer to repair aperture 120. As previously noted, the patch area preferably does not have any rubber fillers therein since such fillers will appreciably weaken the adhesive bond of the amine curable polymer or prepolymer. Moreover, cut 112 and cavity 212 do have a rubber filler in the amine curable polymer or prepolymer. Filler 50, 150, or 250 is preferably a cured rubber and is in the form of particles. Desirably, the particle size ranges from 10 millimeters to 0.01 (dust size) and preferably from 1.0 millimeter to 0.01 millimeter (dust size). Generally, any type of synthetic rubber can be utilized as the particle filler so long as it is an unsaturated rubber. A class of suitable rubber compounds include the same types of rubbers as that utilized in the article or substrate 10 or 100. That is, conjugated dienes having from 4 to 12 carbon atoms, natural rubber, typically containing in excess of 90 to 95 percent cis-1,4-polyiosprene, copolymers

made from dienes having from 4 to 12 carbon atoms and vinyl substituted aromatics having from 8 to 15 carbon atoms, for example, styrene-butadiene rubber, the various types of nitrile rubber and polychloroprene. Although saturated type rubbers can also be utilized, the unsaturated types give better adhesion and thus are preferred.

The cured rubber source can be any conventional or common source such as ground tire scrap, ground rubber scrap, ground tire tread. The rubber source can also be in the form of a powder such as that obtained by buffing a tire. As should be apparent, such sources are very economical and will generally include specific rubbers such as polybutadiene, natural rubber, styrene-butadiene rubber, synthetic polyisoprene, and combinations thereof.

The amount of rubber utilized in the amine curable polymer or prepolymer ranges from about 10 to about 75 percent by weight, and preferably from about 40 to about 50 percent by weight, with an optimum amount being approximately 43 percent by weight based upon the total amount of said amine curable polymer or prepolymer and said cured rubber particles. Generally, the addition of the rubber particles to the amine curable polymer or prepolymer will make such polymer softer as well as reduce its modulus. The hardness of the amine cured polymer or prepolymer 40, 140, or 240 containing rubber particles therein in aperture 120, cut 112, or cavity 212, respectively, can thus be varied by the type of rubber utilized as well as the amount thereof. Depending upon the repaired article, a desired hardness of the cured rubber-amine cured polymer or prepolymer mixture will vary. It is desirable that the hardness of the rubber particle-amine cured polymer or prepolymer mixture is generaly similar or equal to that of substrate 10, 100, or 200. With regard to a tire, such hardness generally ranges from about 40 to about 90 on the Rockwell Shore A hardness scale, and preferably from about 60 to about 70. The low strain ($Kp/cm^2$) modulus will generally range from about 1.75 to about 3.5, and preferably from about 3.5 to about 5.25. Not only does such rubber particle-amine cured polymer or prepolymer mixture result in improved performance with regard to a repaired article, but the material costs of the filled aperture is reduced.

The cured rubber particles can be added to the amine curable prepolymer or polymer system at any stage and blended or mixed therewith utilizing any conventional mixing device as for example a spatula and a mixer.

The construction of the patch is as set forth above. Thus, the patch can have any number of cords therein.

Generally, any rubber article having a cut, cavity, or an aperture therethrough can usually be repaired by the present invention. Specific examples include tires, especially off-the-road tires such as those utilized for front-end loaders, mining equipment machines, and the like. Repaired articles are shown in the drawings. Fig. 3 relates to a tire having an aperture therethrough and is repaired utilizing patch 20. Patch 20 will have cords therein, not shown. Fig. 4 relates to an opening in the form of a cut as in a tire. The opening can be on the tread area or the sidewall. Fig. 5 relates to a cavity extending into cords 214 of a tire.

When the rubber article is a tire and the deformity is an aperture, as in Fig. 3, usually the patch area is buffed sufficiently to remove surface contamination. The inner liner should at least be buffed and in some cases removed to the tie-gum layer in order to obtain a fresh surface. Occasionally, at times, it is desirable to even remove one or two of the cord plies in order to ensure a fresh surface for bonding. Reinforcing patch 200 can contain a plurality of cords therein (not shown), generally approximately in strength to the cords in the tire to be repaired. The patch is coated with treating agent 30 and then coated with amine curable polymer or prepolymer 40 having no rubber filler therein. The patch is then taped into place over the aperture area. The patch is also held in place by inflating a curing tube located on the inside of the tire. With the aperture of the tire located in the uppermost vertical position, the amine curable polymer or prepolymer having rubber filler 500 therein is poured into the aperture until it is filled. Of course, the aperture has previously been coated with treating agent 300. The top of the aperture is then taped and the amine curable polymer in the patch area and in the aperture is allowed to cure at ambient temperature. Taping of the aperture area retains the polar solvent such as acetone which promotes curing of the polymer. In a variation of this procedure, the amine curable polymer is applied to the patch area and then the patch applied thereto. The patch is taped into place and the polymer is allowed to cure. Next, the amine curable polymer 40 having filler 50 therein is separately added to the aperture so that it is filled and then taped thereover. The aperture portion of the repair is then separately cured at ambient temperature.

With regard to the embodiment of Fig. 4, article 100 is rotated until the cut is located in the uppermost portion and then filled. The amine curable polymer 140 having rubber fillers 150 therein is preferably covered, as by tape, and allowed to cure at ambient temperature.

Considering the embodiment of Fig. 5, it is similar to Fig. 3 in that the hollow, in the form of a cavity, is filled in association with a patch. More specifically, whenever approximately 25 to about 50 percent of cords 214 are severed, broken, or otherwise damaged, the strength of the cords in patch 220 (not shown) is approximately equal to the pre-injury strength of the damaged cords. However, should the number of damaged, severed, or broken cords be approximately 50 percent to 100 percent, the total strength of the cords in the patch is approximately equal to at least the total strength of the cords in the article. The repair of an article having a cavity therein, such as in Fig. 5, generally proceeds in the same manner as in the embodiment of Fig. 3. That is, article 200 is buffed or otherwise cleaned such that one or two of the cords are exposed. The patch area located juxtaposition to cavity 212 is coated with treating agent 2300 as is patch 220. Then, an amine curable polymer or prepolymer is applied to the patch and the patch then

applied to the article and held in place as by taping. The size of the patch is that as discussed above. As in the embodiment of Fig. 3, the article is then rotated until the cavity is in the uppermost position and then the amine curable polymer having filler 250 therein is applied to the cavity which has previously been treated with treating agent 230.

The cavity portion is then taped and allowed to cure with the patch portion. Alternatively, the patch can be separately applied and cured as can the amine curable polymer or prepolymer-filler mixture applied to the cavity. As noted above, when generally about 25 to about 50 percent of the cords are broken or damaged, the strength of the cords in patch 220 is approximately equal to the initial strength of the broken cords. However, when approximately 50 percent or greater of the cords are broken, the strength of the cords of the patch is substantially equal to or greater than the total strength of cords 214 in article 200.

The end result is a repaired article being prepared by an easier method and having equivalent or better strength and durability than that repaired according to heretofore conventional methods that are performed on site. Moreover, the hardness and/or modulus of the repair is similar to the substrate and thus results in improved performance.

In forming the amine curable polymer system, generally the amine curable polymer or prepolymer is mixed with the polar solvent and then the curing agent is added last. As previously noted, the rubber particles can be added at any stage. During cure, an effective and strong bond is formed between the prepolymer or polymer system with the treated elastomer substrate and the previously cured rubber particles. Since the present invention relates to an ambient temperature, repair of large and cumbersome articles such as off-the-road tires, can be made *in situ*. In other words, the repair can be made at the job site. The only accessory which may be required is a tire bladder, although a sand bag can be used. In such a situation, the repair can be made at the local tire repair shop. Since the cure is ambient, no steam chambers, or other vulcanizable tire repair equipment are required. This, of course, also results in an energy savings.

It is to be understood that various conventional additives in typical amounts can be added to the amine curing agent and prepolymer system such as colorants, softeners, fillers, antioxidants and plasticizers.

This aspect of the invention will be better understood by reference to the following representative examples:

Example I

An exterior cut in a tire 36.00 × 51 hauler tire (OTR, off-the-road) was repaired in the following manner using the composite type urethane repair. The cut (commonly known as a spot repair) was buffed thoroughly, making sure the injury was free of any loose rubber particles or cuts or gouges. It was buffed to an RMA #3 or #4 buff rating. The cut was washed thoroughly with acetone on a piece of Rymplecloth. The acetone was allowed to dry completely. The surface was then coated with several coats of a 3 percent trichloro-s-triazinetrione in ethyl acetate allowing each coat to dry before the next coat was applied. After the last coat had dried, a composite kit was mixed and poured or placed into the cut. The composite kit consisted of three components.

| COMPONENT A | COMPONENT B | COMPONENT C |
|---|---|---|
| Adiprene® L-42 (100 gm) | Caytur® 21 (14.3 gm) | Treated Rubber (100 gm) |
| Flexol® (10 gm) Acetone (10 gm) | | |

The treated rubber was tread rubber from passenger and truck tires (both natural and synthetic rubber) that was graded to remove large chunks of rubber and when washed with acetone (slurried), dried and treated with a dilute solution of trichloro-s-triazinetrione in ethyl acetate (slurried). The rubber was separated from the primer and dried overnight at room temperature and then at 100°C for one hour.

The mixing procedure consisted of mixing component C with component A, thoroughly; then mixing component B with the mixture of A and C. The mixed material was then added to the cut by means of a spatula. The surface was taped in order to promote the ambient cure by containing the acetone. The repair was allowed to cure for 24 hours at ambient temperature. After the required time of cure, the tape was removed and the tire was ready for service.

After 973 hours of testing, the repair was better than a control.

Example II

A 10.00 × 20 Load Range F, 8-ply, Transport 1 Truck tire having a 1.91 cm (¾ inch) injury in the crown area and extending into the cord area was repaired as follows: The injury was buffed to an RMA #3 or #4 buff rating using a tungsten-carbide tip tool. The innerliner was then buffed down to the top body ply in the same manner. The innerliner was buffed out only as large as the patch to be used. The patch was used as a template and was also buffed on the side to be adhered to the tire. All buffed areas were then washed

thoroughly using acetone on a piece of Rymplecloth. The solvent was allowed to dry thoroughly (10-15 minutes). The buffed and clean surfaces were next treated with two coats of 3 percent trichloro-s-triazinetrione in ethyl acetate, allowing the first coat to dry before the second coat was added. The patch was also coated with two coats of the 3 percent trichloro-s-triazinetrione. The patch was installed first. A standard 50/50 kit was used. It contained the following ingredients:

| | | |
|---|---|---|
| Adiprene® L-42 | 75 g | |
| Adiprene® L-367 | 75 g | |
| Flexol® 4GO | 15 g | A-Side |
| Acetone | 15 g | |
| Caytur® 21 | 36g | B-Side |

The two sides, A and B, were thoroughly mixed and then allowed to thicken to a nearly non-flowable state. At this point, the material was coated onto the patch (Rocson Patch ROCO 8-4) and onto the innerliner area. The patch was put in place and held in position with tape. A tube was inserted and inflated to hold the patch in position and to apply pressure on it. The tire was then rotated so that the injury was located at the top. A composite system was mixed. It had the following formulation:

| | |
|---|---|
| Adiprene® L-42 | 25 g |
| Acetone | 2.5 g |
| 4GO | 2. g |
| Ground Scrap Rubber Treated* | 25 g |
| Caytur® 21 | 3.6 g |

*The ground scrap rubber was graded to a No. 20 mesh, slurried with acetone, drained and dried. It was then treated briefly with a 0.25 percent trichoro-s-triazinetrione in ethyl acetate solution, drained, and dried at 100°C for 10 minutes. It was stored in a jar and kept capped until used.

The composite formulation was mixed thoroughly and placed into the injured area. The repaired area was covered with tape and allowed to cure for 24 hours at room temperature. After the 24 hour cure period, the tape and tube were removed from the tire. Both the patch and spot looked excellent. The tire was tested on a crown break test (a stepwise increase in speed under a loaded condition). The tire ran 1,992 km. It was removed at a duration of 3 hours at 112 km/h. This was considered an excellent result for this type of severe test on a repaired tire.

Gum Rubber

The instant invention is also useful in repairing reinforced elastomer articles with gum rubber wherein damage has been manifested as a chunk-out, leaving a hollow area in the article. The injury may extend completely through the article or only through a portion thereof, but reinforcement, that is cords or belts, contained in the article will have been partially or completely severed thereby providing a weakened area.

This aspect of the invention can be seen with reference to the figures. As is readily apparent, the salient features in each are identical except that the hollow 4120 in Fig. 7 does not extend completely through the substrate. For the sake of simplicity, all references to Figure 6 shall have equal reference to Figure 7, except for the dimensions of the hollow, as above. Referring then to Fig. 6, the article is generally indicated by the number 410, comprising a substrate 413 having embedded therein a plurality of reinforcement cords or belts 414, and a hollow 412.

The substrate 413 can be any conventional elastomer or rubber known to those skilled in the art and having unsaturated groups therein. For example, it can be made from various dienes, vinyl substituted aromatic compounds, etc. as set forth above which is hereby fully incorporated by reference as is the preparation of such elastomers.

The next step in utilizing this portion of the packing of a quantity of uncured gum rubber 422 into the hollow 412, most preferably from the outer surface defined as that surface of the substrate opposite where a patch 420 is later positioned. The gum rubber is then cured in place using conventional means such as a pair of heated plates, otherwise known as spotters, one applied to the outer surface 424 and one to the inner surface of the substrate.

The types of gum rubber which can be used are well known in the art, being generally composed of compounds of natural rubber or rubber blends and typically having other compounding ingredients such as

sulfur, carbon black, accelerators. A variety of all purpose repair gums, readily available commercially, can be used. Alternatively, one skilled in the art can readily devise a suitable gum rubber recipe without undue experimentation.

Once the gum rubber has been cured in place, the innerside is buffed around the now filled aperture and a treating agent 416 applied both to the substrate and the cured gum rubber surfaces, which should of course be first cleaned as outlined above. An amine curable polymer 418 is then applied to the inner surface after having been first allowed to thicken or partially "set up", resulting in an increase in viscosity to Ca. 0,1-1,0 Kp. sec/m$^2$. This results in a toothpaste-like consistency helping hold the polymer in place while the patch is applied.

The patch, after being buffed and having received a coating of treating agent 416, is then applied to the polymer surface. It is thereafter temporarily taped into place and held by some form of applied pressure, such as, in the case of a tire, a curing tube or a plurality of sand bags. The repair is allowed to set in this position for approximately 424 hours. The end result is a repaired article having much better strength and durability than one repaired according to heretofore known methods.

In the embodiment of Fig. 7, the hollow 120 in the article 100 is in the form of a cavity wherein some cords 140 of the reinforced article have been damaged or severed. Usually at least 25 percent of the cords have been broken or damaged and the article is repaired utilizing a patch. Either the cavity can be filled or the patch applied first. In repair of cavity 4120, the surface is first cleaned. The cavity is then filled with a gum rubber 422, generally to the level of the substrate 413. Naturally, in this operation, the cavity is located in the upper most vertical position of the article.

The area to be patched is prepared as before by cleaning and even buffing, in which, in either embodiment, the tie-gum layer or the cord ply layer can be exposed. Treating layer 416 is applied to the patch area of substrate 4130 as well as to one side of the patch 420. The amine curable polymer of prepolymer 418 is then applied to the treated side of the patch, with the patch in turn being applied to the treated portion of substrate 4130. The ends of the patch can be taped to the substrate or held in place with a curing tube located inside the tire. The number of cords in the patch is as previously set forth. That is, if less than 25 percent of the cords are damaged, the use of the patch having cords therein is optional in that a solid rubber patch provides adequate reinforcement. When approximately 25 to 50 percent of the cords are damaged or severed, the strength of the cords in the patch is at least equal to the strength of such cords before being damaged. When approximately 50 percent or more of the cords are damaged, the strength of the cords and the patch is equal to the strength of the total number of cords in the substrate before any injury thereto. The repair is then cured at ambient temperature.

The type of suitable treating agents used, and typical amounts thereof are in accordance as set forth above. Similarly, the type of various amine curable polymers or prepolymers, typical urethane polymers or prepolymers, amine curing agents, and the equivalent weight of amine curing agents is also set forth above. The above portion of the specification also sets forth the blending of the curing agents, i.e., polar solvents as well as the amount of solvent. Thus, once the bottom of the gum rubber is treated with the treating agent, the amine curable polymer or prepolymer is blended with a suitable amount of amine curing agent and a polar solvent is applied. The treating agent is also applied to the patch which is applied to the amine curable polymer layer. The entire patch amine curable polymer layer is then cured at ambient temperature.

Considering patch 420, it can generally be of any desired size so long as it is greater in surface area than the hollow it seals. Typically, the surface area of the patch is at least twice as great as the hollow. Generally, an appropriate patch size will be known to one skilled in the art of patch construction and/or patch application. The patch is made of rubber and is generally fully cured. Although cured natural rubber or a composition containing at least 80% by weight of natural rubber is often preferred, any conventional type of cured rubber compound can be utilized. Thus, the patch can be made from a conjugated diene having from 4 to 12 carbon atoms, copolymers made from conjugated dienes having from 4 to 12 carbon atoms with vinyl substituted aromatics having from 8 to 15 carbon atoms, for example styrene-butadiene rubber. In essence, the patch can be made from the same type of rubber as the substrate. Often, the patch will have a cushioned layer thereon to alleviate stresses formed between the tire carcass and the patch.

Because the patch must provide structural reinforcement to the repaired article, it generally utilizes cords in the same manner as the article. Although the number of cords can range from a small number to a very large number, as above, they generally equal in strength the cords damaged in the substrate. Such a provision provides an adequate reinforcement for the article. The cords can be made of polyester, nylon, steel or rayon with nylon being preferred. It has been found that according to the present invention, large hollows can be repaired up to approximately 20.32 cm (8 inches) in diameter.

In preparing the amine curable polymer system, generally the amine curable polymer or prepolymer is mixed with the polar solvent and thereafter the curing agent. During cure, an effective and strong bond is formed between the prepolymer or polymer system and the treated elastomer substrate. Since the present invention relates to an ambient temperature cure, repair of large and cumbersome articles such as off the road tires and conveyor belts, can be made in situ. In other words, the repair can be made at the job site. The only accessory which may be required is some means for holding the patch in place while the polymer cures. As above, this can be an inflatable bladder or one or more sand bags. Since the cure is ambient, no steam chambers or other vulcanizing tire repair equipment is required other than that necessary to cure the

gum rubber. This of course also results in energy savings.

It is to be understood that various conventional additives in typical amounts can be added to the amine curing agent and prepolymer system such as colorants, softeners, fillers, antioxidants, plasticizers, and the like.

This aspect of the invention will be better understood by reference to the following representative examples:

Example III

Sidewall Section Repair

An 11.00 R 24.5 steel radial truck tire containing two injuries in the sidewall was repaired as follows: injury number 1 was 0.95 cm (3/8 inches) wide by 10.16 cm (4 inches) long after buffing with a tungsten-carbide tip tool. The buffed area was cleaned with a rubber solvent. The innerliner was then marked with an outline of the patch and likewise buffed with the tungsten-carbide tool. Only the innerliner was buffed. The buffed areas were cleaned again with a rubber solvent and allowed to dry thoroughly. A coat of Firestone's Sup-R-Tac rubber cement was applied to the buffed areas. It also was allowed to dry thoroughly. An uncured patch was stitched into place (Rocson 5314—6, Rocson, Inc., Copley, Ohio). Uncured all-purpose gum rubber (Roscon regular cure AP repair gum) was then stitched into the external injury. The repair was cured in a Vulcan split-rim mold.

Injury number 2 was 0,95 cm (3/8 inch) wide by 8.89 cm (3 1/2 inches) long after buffing with a tungsten-carbide tip tool. The cut was cleaned throughly with a rubber solvent and allowed to dry. A cover patch was cemented and stitched to the innerliner in order to hold the gum rubber in the external injury. The cover patch, made from the all purpose gum rubber, was about 1,27 cm (1/2 inch) larger in all directions than the injury and about 0,32 cm (1/8 inch) thick. One coat of Firestone's Sup-R-Tac rubber cement was applied to the injured area and allowed to dry. Uncured all-purpose gum rubber (Roscon regular cure AP repair gum) was stitched into the external injury and cured in a Vulcan split-rim mold. The reinforced patch was then installed as follows: the innerliner was buffed to the patch size, making sure to remove the cover strip added earlier. The patch was also buffed. The buffed areas, patch and innerliner, were cleaned with acetone on a piece of Rymplecloth and allowed to dry. Two coats of a 3 percent trichloro-s-triazinetrione in ethylacetate were applied to the buffed innerliner and patch. After the primer system had dried, a standard 50/50 kit was mixed. The composition was as follows:

| | | |
|---|---|---|
| Adiprene® L 42 | 150 g | |
| Adiprene® L 367 | 150 g | |
| Flexol® 4GO | 30 g | |
| Acetone | 30 g | A-Side |
| Caytur® 21 | 72 g | |
| Black MB* | 2 g | B-Side |

* 15 parts of carbon black in Dioctyl phthalate base.

The thoroughly mixed material was allowed to thicken to a nearly non-pourable stage and then applied to the patch and innerliner area. The patch was placed in position and held there with tape. A tube was then inserted and inflated to hold the patch in position and to apply pressure on it. The patch was cured for 24 hours at room temperature. After the 24 hour cure period, the tape and tube were removed. The repair had good appearance. The tire was tested on a radial truck tire endurance test known as a C—2 test, which loads the tire 40 percent over the rated load and runs 35,2 kmh until failure. The tire failed at 7128 km yielding very good performance for a repaired tire. As a comparison, new tires are expected to run 11200 km and a used tire over 4800 km. The failure occured on the opposite side of the tire, away from the two repairs. The uncured patch had fallen off the innerliner.

Example IV

Full Section (Crown) Repair

An 18.00 × 25,28 ply rated, off-the-road (OTR) tire containing a 1 × 2 1/2 inch injury completely through the tire in the crown area was repaired as follows: the injury was buffed clean to an RMA #3 or #4 buff rating using a tungsten carbide tool. The innerliner was lightly buffed 1/2 to 1 inches wider than the injury. The buffed areas were cleaned with a rubber solvent and allowed to dry. A coat of Firestone's Sup-R-Tac rubber cement was applied to the buffed surface and allowed to dry. A cover patch made from uncured all purpose gum rubber (0,32 cm (1/8 inch) thick Crocson Patch Company, Copley, Ohio) was stitched onto the innerliner. The external injury was then filled with the same rubber by stitching small amounts in at a time. The spot was then cured using a Vulcan mold. After the tire had cooled, the patch was positioned over the

internal injury and outlined. The temporary cover patch, innerliner, tie-gum and two body plys were removed from the tire, tapering the edges of the innerliner so that the patch made a close fit with it. The patch, a Roco No. 4, was also buffed. All buffed areas were cleaned using acetone and Rymplecloth. After the surface had dried, several coats of a 3 percent trichloro-s-triazinetrione in ethylacetate were applied to the innerliner area and the patch. The primer was allowed to dry thoroughly. A standard 50/50 kit described in Example IV was mixed thoroughly and allowed to thicken nearly to a non-pourable stage. The material was then applied to the patch and the innerliner areas. The patch was installed and taped in place. A tube was inflated behind the patch to hold the patch in position and to apply pressure to it. The patch was cured 24 hours at room temperature after which the tube and tape were removed. The repair looked excellent. The tire was recapped and sent back into service. The tire has not been returned after seven months, indicating that no failure has occured.

Example V

Reinforce (Crown) Repair

A 33.5 × 33,44 ply rated, OTR tire requiring a reinforce patch was repaired as follows: the weaken area of the tire was located on the inside of the tire and marked. A template of the size of the patch to be added was centered over the injured area and outlined. The area was buffed with a tungsten carbide tool down to the top or first body ply (removed innerliner and tie-gum layers). The buffed area was washed thoroughly with acetone on a piece of Rymplecloth. Both the patch and innerliner were then treated with several coats of a 3 percent trichloro-s-triazinetrione in ethyl acetate. The primer was allowed to dry thoroughly. A standard 50/50 kit described in Example III was mixed thoroughly and allowed to thicken nearly to a non-pourable stage. The material was then applied to the patch and innerliner areas. The patch was installed and taped in place. A tube was inflated behind the patch to hold the patch in position and to apply pressure to it. The patch was cured 24 hours at room temperature. After the 24 hours had elapsed, the tube and tape were removed. The repair looked very good and was tightly bound to the innerliner. The tire was recapped, the external spot being repaired at the time of recapping. The tire was sent back into service. The tire has not been returned after seven months, indicating continued use.

Generally, any rubber article having a hollow therein can usually be repaired by the present invention. Specific examples include conveyor belts and tires, especially off the road tires such as those utilized for front-end loaders, mining equipment machines and the like.

**Claims**

1. A repaired, reinforced elastomer article, comprising:

(a) the elastomer article, said elastomer having unsaturated groups therein, said article being cured and having a hollow or cut therein;

(b) a treating agent, said treating agent coating said hollow or cut, said treating agent selected from the group consisting of N-halohydantoins, N-haloamides, N-halimides, and combination thereof;

(c) an amine curable polymer or prepolymer, said amine curable polymer or prepolymer substantially filling said hollow or cut;

(d) said amine curable polymer or prepolymer having been bonded to said hollow or cut at ambient temperature, characterized by

(e) a cured elastomer patch, said patch being cured and located juxtaposition to said hollow or cut on the interior of said article; and

(f) said amine curable polymer or prepolymer also located between said patch and said article in said juxtaposition area and having rubber particles therein, substantially filling said hollow or cut wherein the amount of said rubber particles in said hollow or cut is from 10 percent to 75 percent by weight based on the weight of said amine curable polymer or prepolymer and said rubber filler particles and wherein said rubber filler particles have a particle size from 10 mm to 0.01 mm.

2. A repaired elastomer article according to Claim 1, wherein said amine curable polymer or prepolymer is selected from the group consisting of (a) epoxy resins; (b) halogen-containing hydrocarbon polymers; (c) chlorosulfonated polymers; (d) polymers containing acid halide groups such as

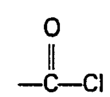

or haloformate groups such as

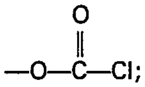

(e) polymers containing anhydride groups which, on reaction with diamines, yield amide-acid linkages, (f) organopolysiloxanes; (g) urethane polymers or prepolymers; and combinations thereof, and wherein said treating agent is selected from the group consisting of 1,3-dichloro-5-5-dimethyl hydantoin; 1,3-dichloro-5-methyl-5-isobutyl hydantoin; 1,3-dichloro-5-methyl-5-hexyl hydantoin; N-bromoacetamide; tetrachloro-

glycoluril; N-bromosuccinimide, and mono-, di-, or trichloroisocyanuric acid.

3. A repaired, reinforced elastomer article, according to claim 1 and/or 2, characterized by: a cured gum rubber disposed within the said hollow and filling it thereby in lien of said amine curable polymer or prepolymer containing said rubber particles.

4. A repaired elastomer article according to any proceeding Claim 1—3, wherein said elastomer article is a tire.

5. A process for repairing a cured, reinforced elastomer article according to claim 1, comprising the steps of:

(a) applying a treating agent or a hollow in the elastomer article, to a patch area, and to a cured elastomer patch, said patch area located on the interior side of said article and juxtaposition to said hollow, said elastomer having unsaturated groups therein, said treating agent selected from the group consisting of N-halohydantoins, N-haloamides, N-haloimides, and combinations thereof;

(b) applying an amine curable polymer or prepolymer system having rubber particles to said hollow, to said patch area and to said patch; and

(c) applying said patch juxtaposition to said patch area;

(d) curing said amine curable polymer or prepolymer at ambient temperature.

6. A process according to Claim 5, wherein said amine curable polymer or prepolymer system comprises a polar solvent, an amine curable polymer or prepolymer, and an amine curing agent, said polar solvent is selected from a compound having dipole moments in excess of 0.4 debye in which there are no more than a total of 8 $CH_3$—, $CH_2$—, or tertiary carbon radicals per polar group contained in said compound, benzene, and biphenyl; and said amine curable polymer or prepolymer is selected from the group consisting of (a) epoxy resins; (b) halogen-containing hydrocarbon polymers; (c) chlorosulfonated polymers; (d) polymers containing acid halide groups such as

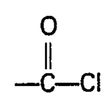

or haloformate groups such as

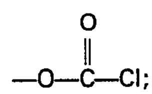

(e) polymers containing anhydride groups which, on reaction with diamines, yield amide-acid linkages, (f) organopolysiloxanes; (g) urethane polymers or prepolymers; and combinations thereof.

**Patentansprüche**

1. Wiederhergestellter, verstärkter elastomerer Gegenstand, umfassend:

(a) den elastomeren Gegenstand, dessen Elastomer ungesättigte Gruppen besitzt, wobei der Gegenstand gehärtet ist und ein Loch oder Schnitt aufweist;

(b) ein Behandlungsreagenz, welches das Loch oder den Schnitt abdeckt und aus der Gruppe ausgewählt ist, die N-halohydantoine, N-Haloamide, N-Halimide und deren Kombinationen umfaßt;

(c) ein Amin-härtbares Polymer oder Prepolymer, die im wesentlichen das Loch bzw. den Schnitt ausfüllen;

(d) wobei das Amin-härtbare Polymer oder das Prepolymer bei Umgebungstemperatur mit dem Loch oder dem Schnitt verbunden worden sind; gekennzeichnet durch

(e) einen gehärteten, elastomeren Flicken, der gehärtet und gegenüberliegend auf das Innere des Gegenstandes angeordnet worden ist; und

(f) das Amin-härtbare Polymer oder Prepolymer, das ebenfalls zwischen dem Flicken und dem Gegenstand im gegenüberliegenden Bereich angeordnet ist, und Gummipartikel aufweist und im wesentlichen das Loch bzw. den Schnitt ausfüllt, wobei die Menge der Gummipartikel im Loch oder Schnitt von 10—75 Gew% beträgt, bezogen auf das Gewicht des Amin-härtbaren Polymers oder Prepolymers und der Gummi-Füllpartikel, und wobei die Gummifüllpartikel eine Partikelgröße von 10 mm bis 0,01 mm aufweisen.

2. Wiederhergestellter elastomerer Gegenstand nach Anspruch 1, dadurch gekennzeichnet, daß das Amin-härtbare Polymer oder Prepolymer aus der Gruppe ausgewählt wird, die aus (a) Epoxidharzen; (b) Halogen enthaltenden Kohlenwasserstoffpolymeren; (c) chlorosulfonierten Polymeren; (d) Polymeren mit Säurehalogenidgruppen wie z.B.

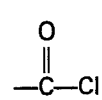

oder Haloameisensäuregruppen wie z.B.

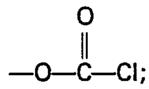

(e) Polymer enthaltende Anhydridgruppen, die nach Reaktionen mit Diaminen Amid-Säurebindungen ergeben; (f) Organopolysiloxane; (g) Urethanpolymere oder Prepolymere und deren Kombinationen umfassen, und wobei das Behandlungsreagenz aus der Gruppe ausgewählt wird, die aus 1,3-dichloro-5-5-dimethylhydantoin; 1,3-dichloro-5-methyl-5-isobutyl-hydantoin; 1,3-dichloro-5-methyl-5-hexyl-hydantoin; N-bromacetamid; Tetrachloroglykoluril; N-Bromsuccinimid und Mono-, Di- oder Trichlorisocyanursäure besteht.

3. Wiederhergestellter elastomerer Gegenstand nach Anspruch 1 und/oder 2, gekennzeichnet durch ein gehärtetes Gummikautschuk, der innerhalb des Loches angeordnet ist und es dadurch füllt, anstelle des aminhärtbaren Polymers oder Prepolymers, das die Gummipartikel umfaßt.

4. Wiederhergestellter elastomerer Gegenstand nach irgendeinem der vorstehenden Ansprüche 1 bis 3, dadurch gekennzeichnet, daß der elastomere Gegenstand ein Reifen ist.

5. Verfahren zum Wiederherstellen eines gehärteten, verstärkten elastomeren Gegenstandes nach Anspruch 1, folgende Stufen umfassend:

(a) Anbringen eines Behandlungsreagenzes auf ein Loch im elastomeren Gegenstand, auf einen Flickenbereich und auf einen gehärteten, elastomeren Flicken, wobei der Flickenbereich auf der Innenseite des Gegenstandes dem Loch gegenüber angeordnet ist, und wobei das Elastomer ungesättigte Gruppen besitzt, und wobei das Behandlungsreagenz aus der Gruppe ausgewählt wird, die aus N-Halohydantoinen, N-Haloamiden, N-Haloimiden und deren Kombinationen besteht;

(b) Auftragen eines Amin-härtbaren Polymers oder Prepolymersystems, das Gummipartikel besitzt, auf das Loch, den genannten Flickenbereich und den Flicken; und

(c) Aufbringen des Flickens gegenüberliegend zum Flickenbereich;

(d) Aushärten des Amin-härtbaren Polymers oder Prepolymers bei Umgebungstemperatur.

6. Verfahren nach Anspruch 5, dadurch gekennzeichnet, daß das Amin-härtbare Polymer oder Prepolymersystem ein polares Lösungsmittel, ein Amin-härtbares Polymer oder Prepolymer und ein Aminhärtungsreagenz umfaßt, wobei das polare Lösungsmittel aus Verbindungen ausgewählt wird, die Polmomente > als 0,4 Debye besitzen, bei denen nicht mehr als insgesamt acht $CH_3$—, $CH_2$— oder tertiäre Kohlenstoffreste propolarer Gruppe in der Verbindung enthalten sind, Benzol und Biphenyl; und wobei das Amin-härtbare Polymer oder Prepolymer aus der Gruppe ausgewählt wird, die aus (a) Epoxidharzen; (b) Halogen enthaltenden Kohlenwasserstoffpolymeren; (c) chlorosulfonierten Polymeren; (d) Polymeren mit Säurehalogenidgruppen wie z.B.

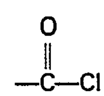

oder Haloameisensäuregruppen wie z.B.

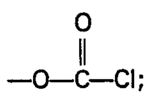

(e) Polymer enthaltende Anhydridgruppen, die nach Reaktionen mit Diaminen Amid-Säurebindungen ergeben; (f) Organopolysiloxane; (g) Urethanpolymere oder Prepolymere und deren Kombinationen umfassen.

**Revendications**

1. Article élastomère renforcé, réparé, comprenant:

(a) l'article élastomère, ledit élastomère renfermant des groupes insaturés, ledit article étant vulcanisé et présentant un creux ou une entaille;

(b) un agent de traitement, ledit agent de traitement revêtant ledit creux ou ladite entaille, ledit agent de traitement étant choisi dans le groupe comprenant des N-halogénohydantoïnes, des N-halogénamides, des N-halogénimides et leurs mélanges;

(c) un polymère ou prépolymère réticulable par une amine, ledit polymère ou prépolymère réticulable par une amine remplissant la plus grande partie dudit creux ou de ladite entaille;

(d) ledit polymère ou prépolymère réticulable par une amine ayant été lié audit creux ou à ladite entaille à température ambiante, caractérisé par la présence

(e) d'une pièce d'élastomère vulcanisé, ladite pièce étant vulcanisée et juxtaposée audit creux ou à ladite entaille à l'intérieur dudit article; et

(f) ledit polymère ou prépolymère réticulable par une amine, situé également entre ladite pièce et ledit article dans ladite zone de juxtaposition et renfermant des particules de caoutchouc, remplissant la plus grande partie dudit creux ou de ladite entaille, la quantité desdites particules de caoutchouc dans ledit creux ou ladite entaille étant comprise dans l'intervalle de 10% à 75% en poids, sur la base du poids dudit

polymère ou prépolymère réticulable par une amine et desdites particules de caoutchouc de remplissage, lesdites particules de caoutchouc de remplissage ayant un diamètre de particules de 10 mm à 0,01 mm.

2. Article élastomère réparé suivant la revendication 1, dans lequel le polymère ou prépolymère réticulable par une amine est choisi dans le groupe comprenant (a) des résines époxy; (b) des polymères hydrocarbonés halogénés; (c) des polymères chlorosulfonés; (d) des polymères contenant des groupes halogénure d'acide tels que

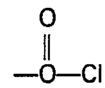

ou des groupes halogénoformiate tels que

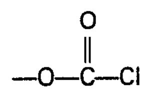

(e) des polymères contenant des groupes anhydride qui, par réaction avec des diamines, donnent des liaisons amide-acide; (f) des organopolysiloxanes; (g) des polymères ou prépolymères d'uréthanne; et leurs mélanges, et dans lequel l'agent de traitement est choisi dans le groupe comprenant la 1,3-dichloro-5-5-diméthylhydantoïne; la 1,3-dichloro-5-méthyl-5-isobutylhydantoïne; la 1,3-dichloro-5-méthyl-5-hexylhydantoïne; le N-bromo-acétamide; le tétrachloroglycolurile; le N-bromosuccinimide, et l'acide mono-, di- ou trichloro-isocyanurique.

3. Article élastomère renforcé réparé suivant la revendication 1 et/ou la revendication 2, caractérisé par la présence d'une gomme de caoutchouc vulcanisé placée à l'intérieur dudit creux et le remplissant ainsi au lieu du polymère ou prépolymère réticulable par une amine contenant les particules de caoutchouc.

4. Article élastomère réparé suivant l'une quelconque des revendications 1 à 3 précédentes, dans lequel l'article élastomère est un bandage pneumatique.

5. Procédé de réparation d'un article élastomère renforcé réticulé suivant la revendication 1, comprenant les étapes consistant:

(a) à appliquer un agent de traitement à un creux dans l'article élastomère, au niveau de la zone d'une pièce et à une pièce élastomère vulcanisée, ladite zone de pièce étant située à la face interne dudit article et juxtaposée audit creux, ledit élastomère renfermant des groupes insaturés, ledit agent de traitement étant choisi dans le groupe comprenant des N-halogénohydantoïnes, des N-halogénamides, des N-halogénimides et leurs mélanges;

(b) à appliquer une composition de polymère ou prépolymère réticulable par une amine, renfermant des particules de caoutchouc, audit creux, à ladite zone de pièce et à ladite pièce; et

(c) à appliquer ladite pièce en juxtaposition avec ladite zone de pièce;

(d) à provoquer la réticulation à température ambiante dudit polymère ou prépolymère réticulable par une amine.

6. Procédé suivant la revendication 5, dans lequel la composition de polymère ou prépolymère réticulable par une amine comprend un solvant polaire, un polymère ou prépolymère réticulable par une amine et un agent aminé de réticulation, ledit solvant polaire étant choisi entre un composé ayant un moment bipolaire supérieur à 0,4 debye et ne renfermant pas plus d'un total de 8 groupes $CH_3$—, $CH_2$— ou radicaux carbonés tertiaires par groupe polaire présent dans ledit composé, le benzène et le biphényle; et ledit polymère ou prépolymère réticulable par une amine est choisi dans le groupe comprenant (a) des résines époxy; (b) des polymères hydrocarbonés halogénés; (c) des polymères chlorosulfonés; (d) des polymères contenant des groupes halogénure d'acide tels que

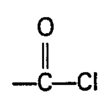

ou des groupes halogénoformiate tels que

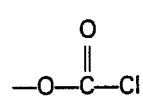

(e) des polymères contenant des groupes anhydride qui, par réaction avec des diamines, donnent des liaisons amide-acide; (f) des organopolysiloxanes; (g) des polymères ou prépolymères d'uréthanne; et leurs mélanges.

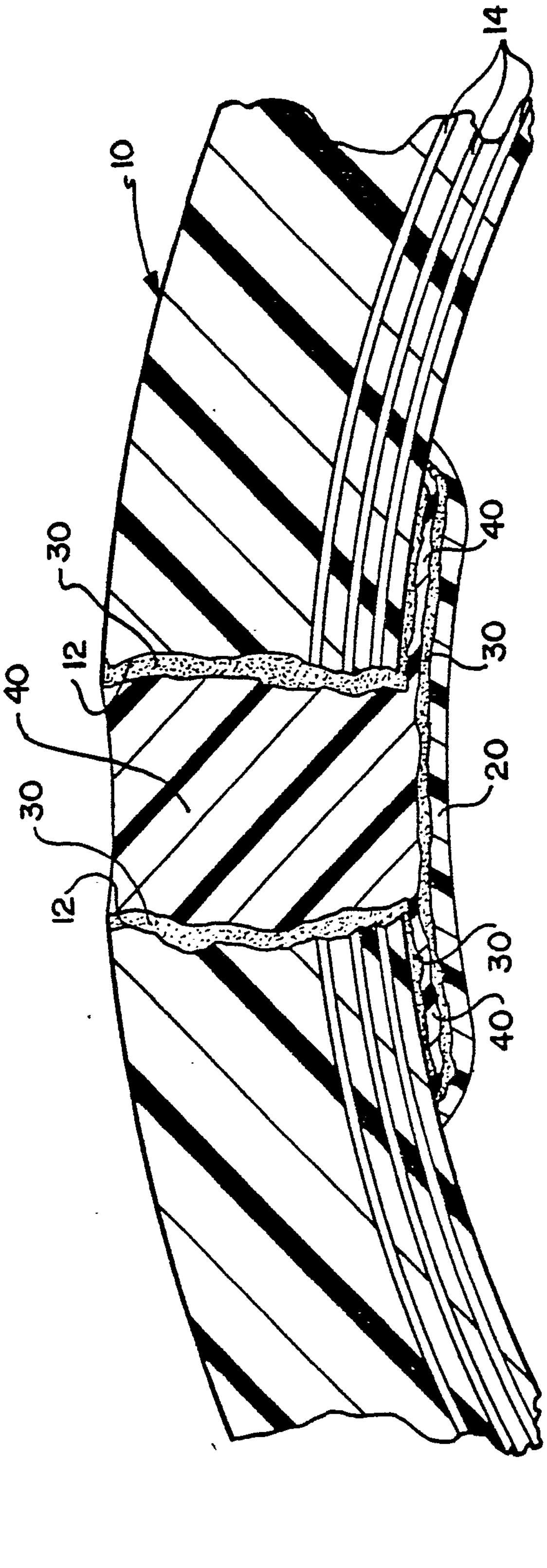


FIG. 1

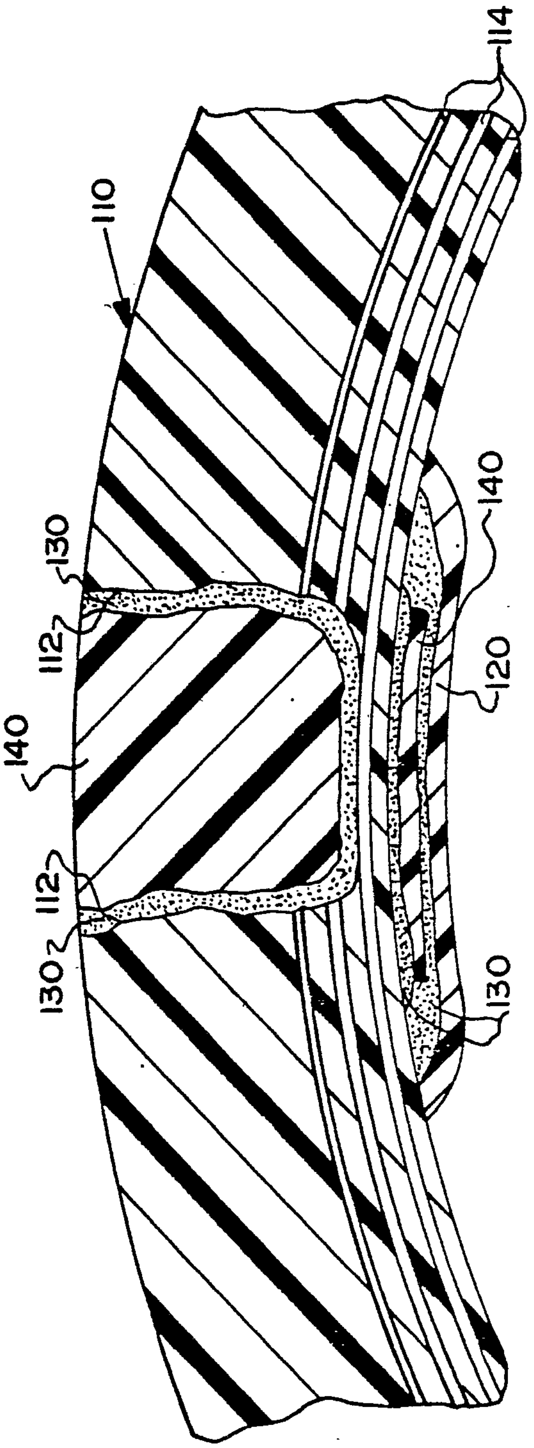


FIG. 2

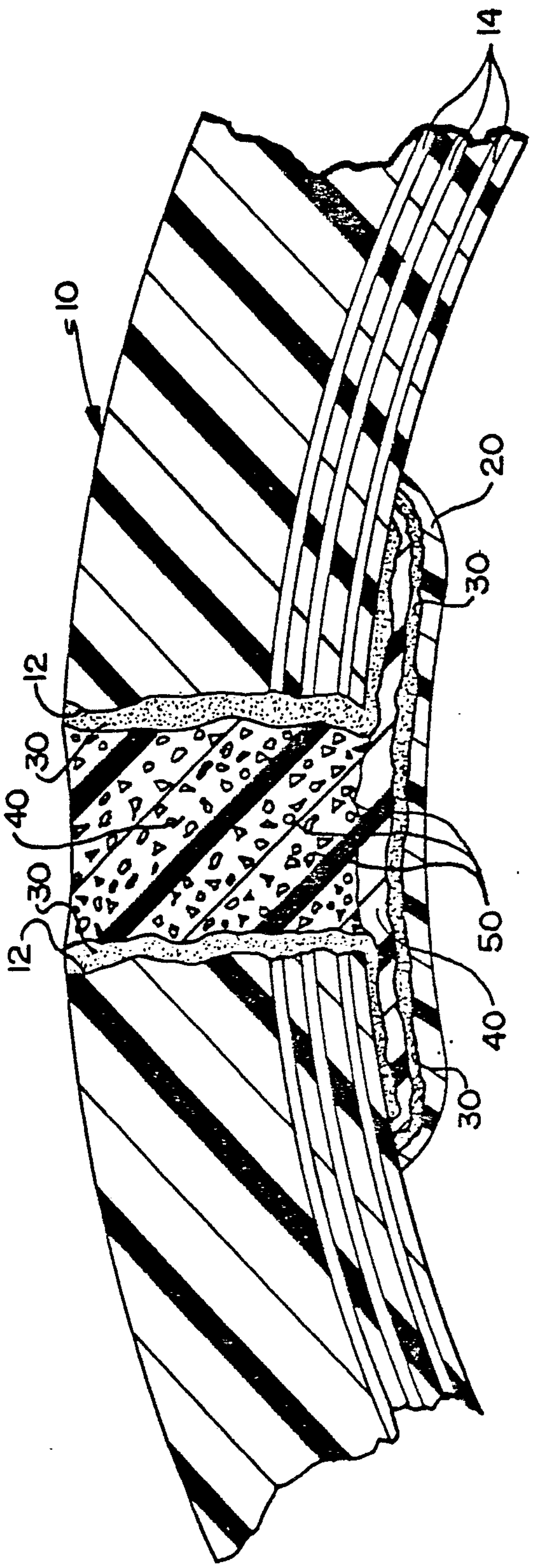


FIG. 3

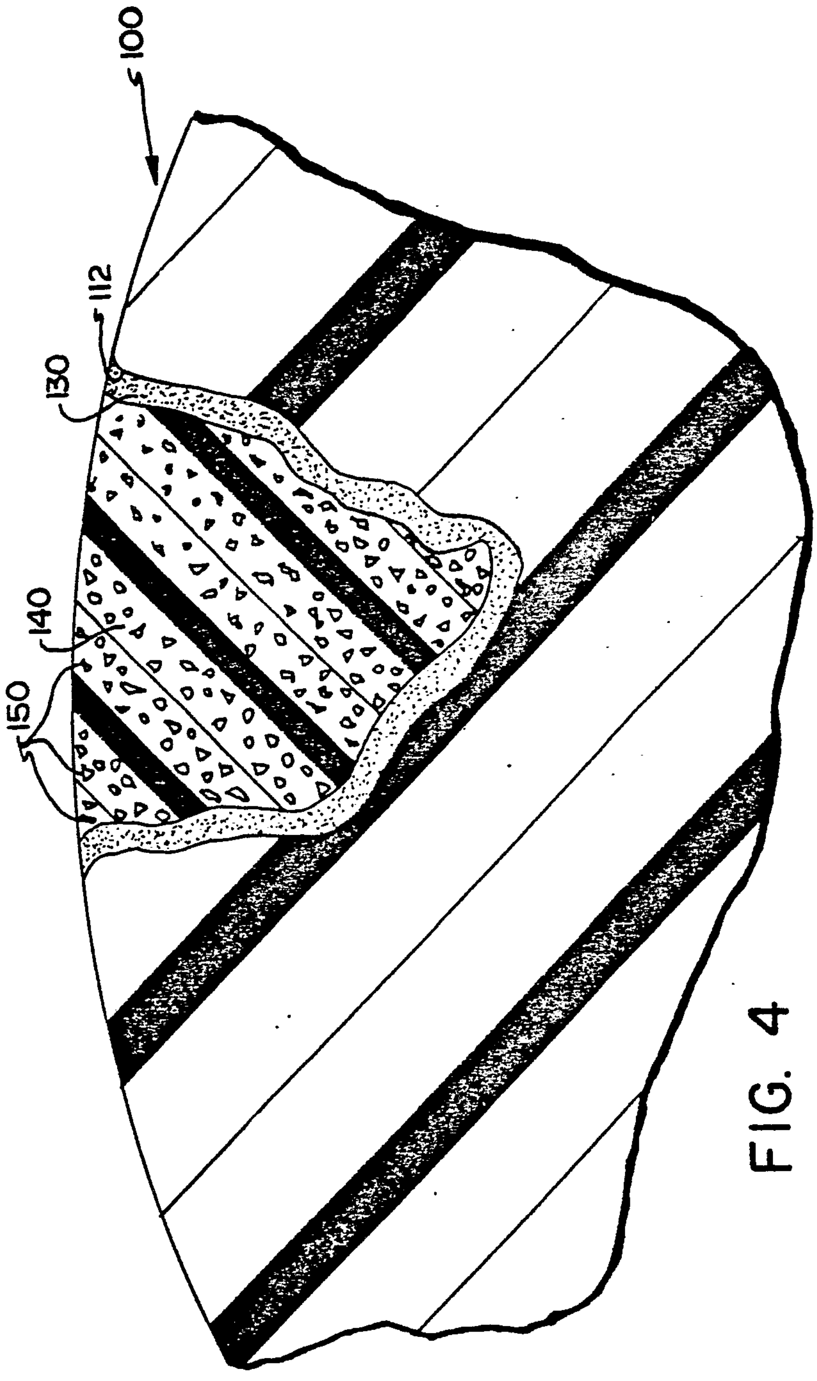


FIG. 4

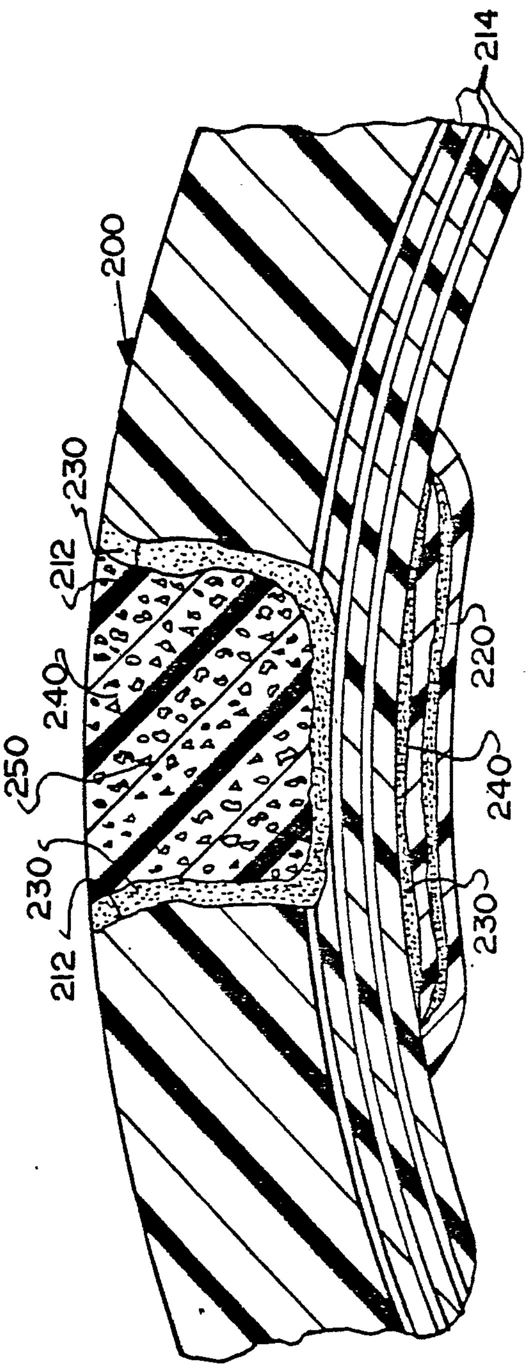


FIG. 5

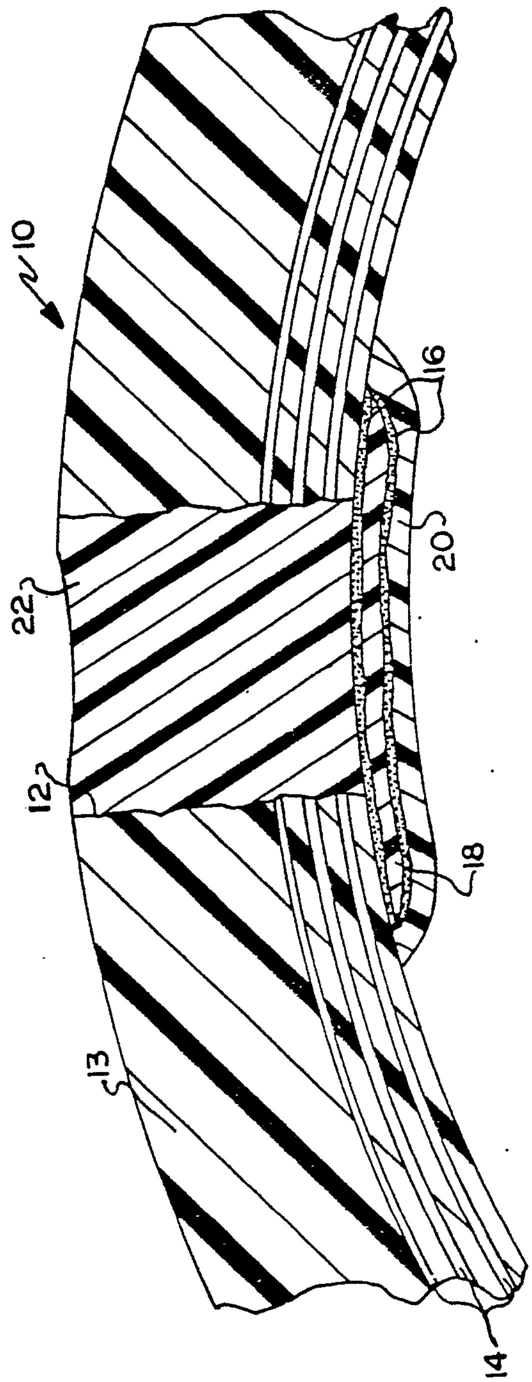


FIG. 6

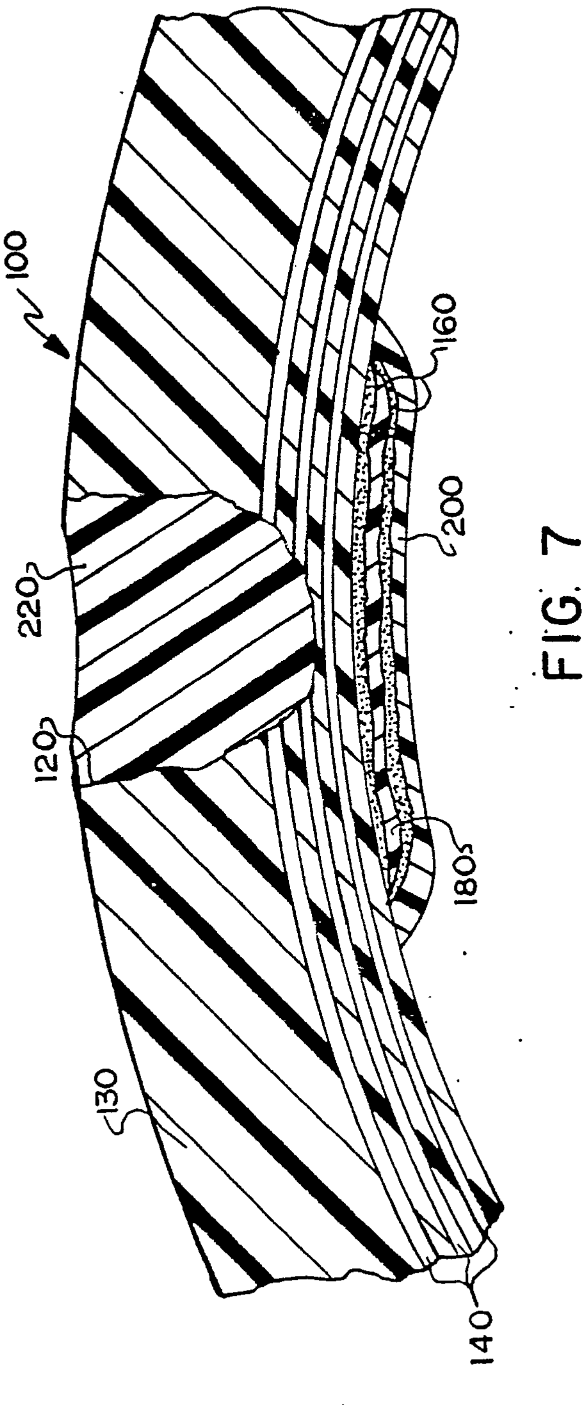


FIG. 7